# EUROPÄISCHE PATENTSCHRIFT

(11) **EP 3 730 257 B1**
(45) Veröffentlichungstag und Bekanntmachung des Hinweises auf die Patenterteilung: **01.10.2025**
(21) Anmeldenummer: 19173896.2
(22) Anmeldetag: 10.05.2019
(51) Int. Cl.: B25J 15/00, B25J 15/06

(54) **KOMMISSIONIERROBOTER MIT EINEM ENDEFFEKTOR MIT DURCH DREHEN AKTIVIERBAREN SAUGGREIFERN**
ORDER PICKING ROBOT WITH AN END EFFECTOR WITH SUCTION GRIPPERS WHICH CAN BE ACTIVATED BY ROTATION
ROBOT DE PRÉPARATION DE COMMANDES MUNI D'UN EFFECTEUR TERMINAL POURVU DE PRÉHENSEURS À VENTOUSE POUVANT ÊTRE ACTIVÉS PAR LA ROTATION

(30) Priorität: 23.04.2019 DE 102019110516
(43) Veröffentlichungstag der Anmeldung: 28.10.2020
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl & Partner mbB

(56) Entgegenhaltungen:
- EP-A1- 0 008 379
- WO-A1-2016/029299
- JP-A- 2001 210 997
- JP-A- S62 176 783

## Beschreibung

Die Erfindung betrifft einen Kommissionierroboter mit einem Endeffektor mit zwei durch Drehen aktivierbaren Sauggreifern.

Es ist aus verschiedenen Zusammenhängen bekannt, zum Handhaben von Produkten oder Artikeln Sauggreifer zu nutzen. Auf dem Markt ist eine Vielzahl von verschiedenartigen Sauggreifern verfügbar, die für verschiedene Einsatzwecke optimiert sind, z.B. zum Greifen von Paketen, Apothekenartikeln, Beuteln oder Säcken, Stückgütern, Plattenmaterialien, Papier- oder Pappbögen.

In Anlagen, in denen Produkte unterschiedlicher Art gehandhabt werden sollen, muss die Anlage beim Wechsel der Produktkategorie aufwendig umgerüstet werden, wobei unter anderem ein für die neue Produktkategorie geeigneter Sauggreifer an einen Greifarm angeschlossen werden muss. Dabei müssen einerseits eine Mechanische Verbindung und andererseits ein Anschluss an eine Saugluft- oder Druckluft Pneumatik oder Hydraulikleitung hergestellt werden.

In verschiedenen Anwendungen, beispielsweise beim Kommissionieren, muss das Produkt aus einem Ladungsträger, insbesondere Behälter mit rechteckiger Grundfläche entnommen werden. Insbesondere dann, wenn das Produkt nicht in gleicher Weise von jeder Seite aus gegriffen werden kann, kann es vorkommen, dass der zu greifende Oberflächenbereich des Produkts in einer Ecke des Behälters liegt und ggf. so orientiert ist, dass er für den Sauggreifer nur schwer zugänglich ist. Dazu ist es z.B. aus der WO 2012163666 A1 bekannt, Sauggreifer dreh- oder schwenkbar an einem handgelenkartigen Endbereich eines Knickarms zu befestigen, so dass der Sauggreifer gut in Ecken des Behälters hineingreifen kann.

Aus der EP 2 708 335 A1 ist ein Hochgeschwindigkeits-Greiferwechselsystem bekannt, in dem ein Sauggreifer mit Magnetkraft an einem vorderen Endeffektor-Hauptkörper eines Knickarms eines Greifsystem befestigt werden kann.

Aus der WO 2012163666 A1 ist ein Kommissioniersystem zum automatisierten Kommissionieren von Artikeln mit einem Knickarmgreifer zum Aufnehmen des Artikels aus einem Behälter bekannt, wobei der Knickarmgreifer einen im Wesentlichen senkrecht stehenden Längsarm und einen um einen Knickwinkel abknickbaren Knickarm aufweist, an dem ein Sauggreifer zum Greifen des Artikels vorgesehen ist, wobei der Längsarm des Knickarmgreifers zumindest doppelt so lang, und insbesondere zumindest fünfmal so lang, wie der Knickarm des Knickarmgreifers ist. Dadurch soll ein besseres Greifen von insbesondere schräg in einem Winkel des Lagerbehälters liegenden Artikeln ermöglicht werden. Ein Umrüsten des Kommissioniersystems auf einen anderen Sauggreifertyp ist aber mit den oben genannten Schwierigkeiten verbunden.

Aus der DE 10 2010 002 317 B4 ist ein System zur Vereinzelung und Kommissionierung von Apothekenartikeln bekannt, das eine Handhabungseinrichtung zur separaten Entnahme von Artikeln von einer ersten Transporteinrichtung und deren Überführung auf eine zweite Transporteinrichtung umfasst, wobei die Handhabungseinrichtung mehrere Greif- und/oder Saugeinrichtungen aufweist, die abhängig von dem zu handhabenden Artikel ausgewählt werden können und die in einer Werkzeugrevolver-Anordnung am vorderen Endeffektor-Hauptkörper des Greifarms befestigt sind.

Das Dokument JP 2001210997 offenbart einen Sauggreifer mit Drehdurchführung zur Verwendung bei der Montage von Elektronikbauteilen.

Das Dokument EP 0008 379 A1 offenbart eine Vorrichtung mit einem um eine vertikale Achse drehbaren Greifersystem für Halbleiterchips.

Das Dokument WO 2016/029299A1 offenbart einen Endeffektor für eine Roboter, der zum Ernten von Pilzen eingesetzt werden soll. Auf einem Karussell sind vier verschiedene Greifer angeordnet.

Der Erfindung liegt insbesondere die Aufgabe zugrunde, einen Kommissionierroboter mit einem Endeffektor bereitzustellen, der einfach, vorzugsweise vollautomatisch, umgerüstet werden kann und der ein zuverlässiges Greifen auch von schräg und/oder in einem Winkel eines Behälters liegenden Artikeln ermöglicht.

Die Aufgabe wird gelöst durch einen Kommissionierroboter mit den Merkmalen des Anspruchs 1. Vorteilhafte Ausgestaltungen der Erfindung ergeben sich aus den Unteransprüchen.

Die Erfindung betrifft einen Kommissionierroboter mit einem als Knickarm augestalteten Roboterarm und einem über eine Schnittstelle am Ende des Roboterarms befestigten Endeffektor mit den Merkmalen des Anspruchs 1.

Dadurch, dass der Sauggreifer über ein freies Ende des Endeffektor-Hauptkörpers hinausragt, können auch tief in einem Behälter liegende Artikel oder Produkte gut gegriffen werden und eine Störkontur des Endeffektor-Hauptkörpers wird minimiert. Durch die drehbare Lagerung wird gleichzeitig mit dem Herausdrehen eines Sauggreifers der andere Sauggreifer in eine in Richtung des proximalen Endes des Endeffektor-Hauptkörpers weisende Richtung gedreht, wodurch sie geschützt vor Kollisionen sind und den Prozess nicht stören.

Ferner wird vorgeschlagen, dass ein Drehantrieb zum Drehen des Greiferträgers in oder an dem Endeffektor-Hauptkörper angeordnet ist bzw. in den Hauptkörper integriert ist. Dadurch kann der Endeffektor sehr universell an verschiedene Knickarm-Robotersysteme angebaut werden.

Nach einer weiteren Ausgestaltung der Erfindung wird vorgeschlagen, dass der Endeffektor-Hauptkörper zur Befestigung an einem Roboterarm ausgelegt ist, dessen Endglied um eine Längsachse des Endeffektor-Hauptkörpers drehbar ist. Dadurch kann eine Orientierung des Sauggreifers in der Längsachse des Endeffektor-Hauptkörpers so gesteuert werden, dass die Artikel oder Produkte zuverlässig gegriffen werden können.

{Nach der Erfindung sind genau zwei Sauggreifer in einander bezogen auf die horizontale Dreh- oder Schwenkachse gegenüber liegenden Positionen auf dem Greiferträger angeordnet. Im Vergleich zu Lösungen mit drei oder mehr Sauggreifern kann der nicht aktive Sauggreifer maximal aus der Arbeitszone herausgedreht werden und sehr gut vor Kollisionen geschützt werden.} [insert this passage into page 3]

In einer vorteilhaften Ausgestaltung der Erfindung umfasst der Endeffektor einen passiven Ventilmechanismus zum Herstellen und Trennen einer Verbindung zwischen der Saug- oder Druckluftleitung und einem der Sauggreifer, wobei der passive Ventilmechanismus so gestaltet ist, dass beim Aktivieren eines Sauggreifers durch Drehen in das diesem Sauggreifer zugeordnete Winkelintervall die Verbindung zwischen der Saug- oder Druckluftleitung und dem aktivierten Sauggreifer automatisch hergestellt wird. Dadurch kann ein aktives Umschalten von Ventilen entfallen. Es kann beim Wechsel der Sauggreifer automatisch die Verbindung einer Saug- oder Druckluftleitung zu einem auszuwechselnden Sauggreifer getrennt- und die Verbindung einer Saug- oder Druckluftleitung zu einem neuen, im nächsten Schritt zu nutzenden Sauggreifer herstellt werden, so dass ein vollautomatisches Umrüsten ermöglicht wird.

Ferner wird vorgeschlagen, dass das Dreh- oder Schwenklager zwei Lagerkörper umfasst, wobei einer der Lagerkörper einen Ventilkörper des Ventilmechanismus bildet oder mit einem Ventilkörper des Ventilmechanismus derart mechanisch verbunden ist, so dass jeder der Sauggreifer in dem ihm zugeordneten Winkelintervall von Drehlagen der Lagerkörper automatisch mit der Saug- oder Druckluftleitung verbunden ist. Durch die Integration des Ventilmechanismus in das Dreh- oder Schwenklager kann eine besonders kompakte Bauweise erreicht werden.

In einer besonders vorteilhaften Ausgestaltung der Erfindung bildet der Ventilmechanismus ein aus den beiden Lagerkörpern gebildetes Drehventil mit Drehdurchführung für die Saug- oder Druckluftleitung.

Es wird insbesondere vorgeschlagen, dass die beiden Lagerkörper gleitend aneinander anliegende Lagerflächen mit Durchtrittsöffnungen umfassen, die in den vorgegebenen Winkelintervallen miteinander überlappen und so die Verbindung zwischen jeweils einem der Sauggreifer und der Saug- oder Druckluftleitung herstellen.

Es wird vorgeschlagen, dass die gleitend aneinander anliegenden Lagerflächen axiale Lagerflächen sind und eine der Durchtrittsöffnungen ein kreisbogenförmiges Langloch ist, welches sich über das Winkelintervall erstreckt.

In einer vorteilhaften Ausgestaltung der Erfindung sind die genau zwei Sauggreifer zwei Sauggreifer mit unterschiedlichen Charakteristika. Die unterschiedlichen Sauggreifer können sich neben dem Durchmesser auch in anderen Parametern unterscheiden, z.B. Material, Art und Spezifikationen des Balgs, Tragkraft, Oberfläche etc., Sauggreifer, die optimiert sind für Beutel, Kartonagen oder Metall. Die Sauggreifer können austauschbar an dem Greiferträger angeordnet sein.

{{Erfindungsgemäß überlappen die unterschiedlichen Sauggreifern zugeordneten vorgegebenen Winkelintervalle nicht und erstrecken sich über Schwenkwinkel von wenigstens 60°, vorzugsweise wenigstens 90°, weiter bevorzugt wenigstens 120°. }} [insert this passage into page 3]

Ein weiterer Aspekt der Erfindung betrifft ein Kommissioniersystem mit einem solchen Kommissionierroboter, einer Bildverarbeitungsvorrichtung zum Erfassen einer Lage und Position eines zu greifenden Artikels in einem Ladungsträger, insbesondere Behälter und einer Steuerung zum Steuern des Endeffektors, wobei die Steuerung dazu ausgelegt ist, einen Drehwinkel des Endeffektor-Hauptkörpers und des Greiferträgers abhängig von der erfassten Art, Position und Lage des Artikels und von Behälterwänden des Behälters einzustellen. Neben Behältern können auch andere Ladungsträger verwendet werden, beispielswiese Tablare, Kartons oder Paletten. Im Folgenden wird der Begriff "Ladungsträger" als Oberbegriff für alle Arten von Ladungsträgern verwendet.

In einer Ausgestaltung der Erfindung wird vorgeschlagen, dass die Bildverarbeitungsvorrichtung dazu ausgelegt ist, einen Artikeltyp des Artikels zu erfassen und die Steuerung dazu ausgelegt ist, abhängig von dem erfassten Artikeltyp einen für den Artikeltyp geeigneten Sauggreifer auszuwählen und in eine aktive Position zu drehen. Für die Auswahl des geeigneten Sauggreifers werden zusätzlich auch Informationen aus den Artikelstammdaten des Rechnersystems verwendet, welches die Kommissionierung steuert.

Ferner wird vorgeschlagen, dass der längliche Endeffektor-Hauptkörper des Greifarms um seine Längsachse drehbar ist - sei es durch Roboter oder durch einen eigenen Drehantrieb - und das Dreh- oder Schwenklager eine bei Benutzung des Endeffektors horizontale Dreh- oder Schwenkachse aufweist. Dadurch kann ein guter Eingriff in Behälter trotz der als Störkonturen wirkenden Ladungsträger- bzw. Behälterwände ermöglicht werden, und zwar so, dass der verwendete Sauggreifer auch an schräg stehende Oberflächen eines zu greifenden Produkts angedockt werden kann, während ein nicht aktiver Sauggreifer in eine Position gedreht werden kann, in welcher er nicht mit den Störkonturen interferiert, insbesondere in eine dem aktiven Sauggreifer diametral gegenüber liegende Position.

Der Greiferträger kann neben Sauggreifern auch andersartige Greifer umfassen, beispielsweise Klauengreifer, die über die Saug- oder Druckluftleitung hydraulisch oder pneumatisch betätigbar sind, oder auch Magnetgreifer, wobei der Magnetgreifer z.B. an einer dem Sauggreifer gegenüberliegenden Position am Greiferträger angeordnet sein kann. Der Magnetgreifer kann passiv über Schleifkontakte/Kontaktstreifen aktiviert werden, die einen Elektromagneten des Magnetgreifers in bestimmten Winkelintervallen des Greiferträgers mit einem Stromkreis verbinden. Der Magnetgreifer kann zum Greifen metallischer, insbesondere magnetisierbarer Artikel genutzt werden.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird andere Kombinationen betrachten, sofern diese Kombinationen in den Schutzbereich der beigefügten Ansprüche fallen, um die Erfindung an seine Bedürfnisse oder an spezielle Anwendungsbereiche anzupassen.

Dabei zeigen:
Fig. 1 ein Kommissioniersystem mit einem Kommissionierroboter nach einem ersten Ausführungsbeispiel der Erfindung;
Fig. 2 einen Endeffektor nach dem ersten Ausführungsbeispiel der Erfindung mit einem Endeffektor-Hauptkörper und einem rotierenden Greiferträger;
Fig. 3 eine schematische Schnittdarstellung des Endeffektors nach Fig. 2;
Fig. 4 eine schematische Darstellung des Endeffektor-Hauptkörpers gemäß Figur 3 ohne den Greiferträger;
Fig. 5 eine axiale Lagerfläche des Greiferträgers gemäß Figur 3 mit zwei Fluiddurchlassöffnungen;
Fig. 6 eine alternative Ausgestaltung der Lagerkörper, die nicht Teil der Erfindung ist;
Fig. 7a eine weitere alternative Ausgestaltung der Lagerkörper, die nicht Teil der Erfindung ist;
Fig. 7b einen ersten Lagerkörper aus der alternativen Ausgestaltung aus Fig. 7a in einer isolierten Darstellung, welcher nicht Teil der Erfindung ist;
Fig. 8 eine schematische Darstellung zu einem Riemenantrieb zum Drehen des Greiferträgers eines erfindungsgemäßen Endeffektors;
Fig. 9 eine schematische Darstellung zu einem Stangenantrieb zum Drehen des Greiferträgers eines erfindungsgemäßen Endeffektors;
Fig. 10 eine schematische Draufsicht eines rechteckigen Behälters mit einem in den Ladungsträger greifenden Endeffektor;
Fig. 11a eine weitere schematische Draufsicht eines rechteckigen Ladungsträgers mit einem in den Ladungsträger greifenden Endeffektor und zwei zu entnehmenden Artikeln; und
Fig. 11b eine weitere schematische Draufsicht des Ladungsträgers aus Fig. 11a mit einem verbleibenden zu entnehmenden Artikel.

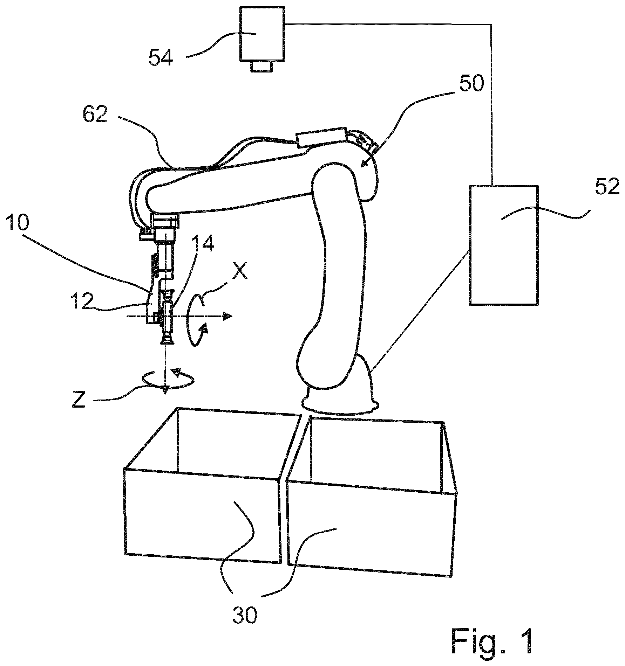

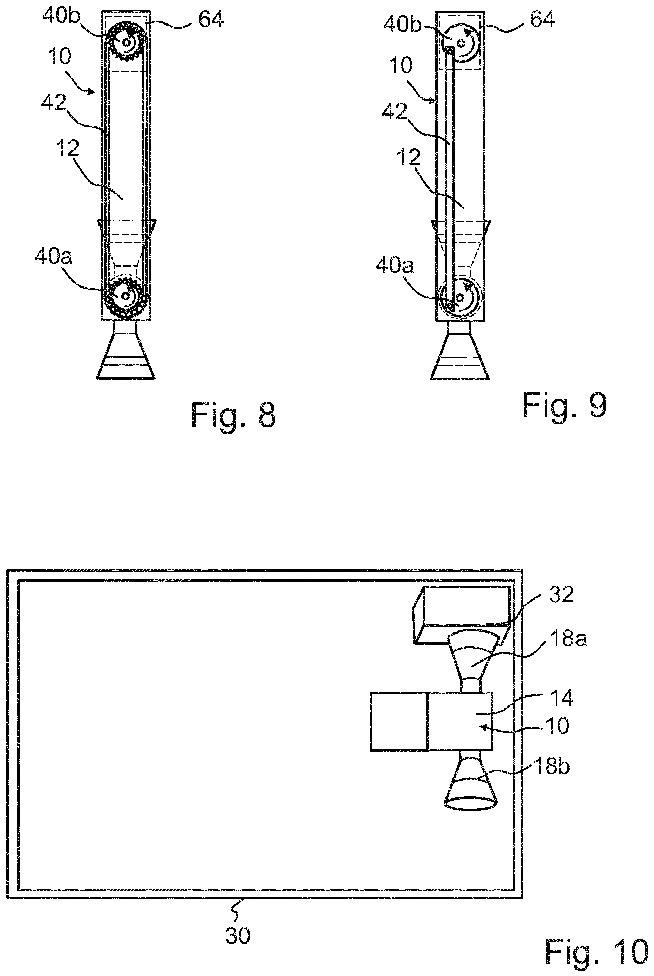

Fig. 1 zeigt ein Kommissioniersystem mit einem Kommissionierroboter 50, einer Steuerung 52 und einem Kamerasystem 54 nach einem ersten Ausführungsbeispiel der Erfindung. Die Steuerung 52 erfasst über das Kamerasystem 54 die Position und/oder Lage sowie den Typ von Artikeln, Produkten oder Gegenständen 32 (Fig. 10 ff), die in von einer Fördertechnik (nicht dargestellt) an- und/oder abtransportierten Behältern 30 liegen oder legt Gegenstände in solchen Behältern 30 ab. Dazu nutzt das Kommissioniersystem einen Kommissionierroboter 50, der mit einem erfindungsgemäßen Endeffektor 10 ausgestattet ist. Der Endeffektor 10 ist am Ende bzw. der Hand eines Knickarms des Kommissionierroboters 50 befestigt und kann dort über einen rotatorischen Freiheitsgrad Z des Kommissionierroboters 50 um seine Längsachse Z rotiert werden.

Der Endeffektor 10 umfasst einen Endeffektor-Hauptkörper 12 und einem Greiferträger 14, der gegenüber dem Endeffektor-Hauptkörper 12 um eine Drehachse X drehbar ist, die senkrecht zur Längs- und Drehachse Z des Endeffektor-Hauptkörpers 12 verläuft. Über Schläuche 62 wird der Endeffektor 10 mit Druck- oder Saugluft versorgt, um Sauggreifer betätigen zu können. Über eine Schnittstelle am Ende des Roboterarms empfängt der Endeffektor 10 Signale zum Drehen des Greiferträgers 14 um die Drehachse X.

Die Steuerung 52 ist durch eine Software dazu ausgelegt, einen Drehwinkel des Endeffektor-Hauptkörpers 12 um die Z-Achse und des Greiferträgers 14 um die X-Achse abhängig von der erfassten Position und Lage des Artikels und von Ladungsträgerwänden des Ladungsträgers 30 einzustellen.

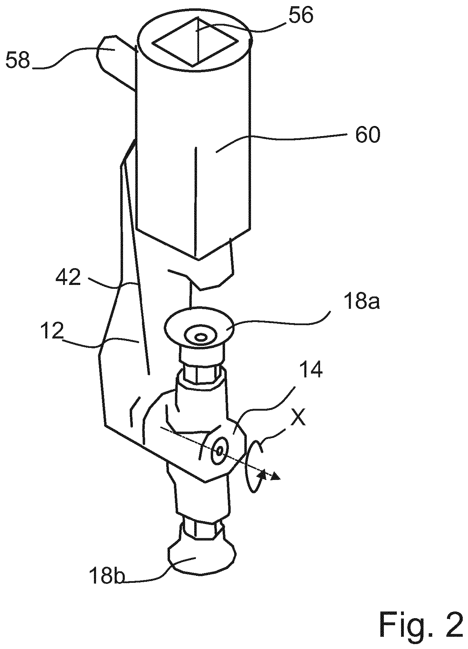

Die aus Steuerung 52 und Kamerasystem 54 bestehende Bildverarbeitungsvorrichtung ist dazu ausgelegt, einen Artikeltyp des Artikels zu erfassen und z.B. eine Artikelnummer zu ermitteln. Die Steuerung 52 ist dazu ausgelegt, abhängig von dem erfassten Artikeltyp einen für den Artikeltyp geeigneten Sauggreifer 18a, 18b (Fig. 2) auszuwählen und in eine aktive Position zu drehen. Dazu greift die Steuerung 52 insbesondere auf Stammdaten des Artikels in einer Datenbank zurück, in der Gewicht, Oberflächenstruktur, Artitikelform, weitere Artikeleigenschaften, und ggf. auch ein zu verwendender Sauggreifer hinterlegt sind.

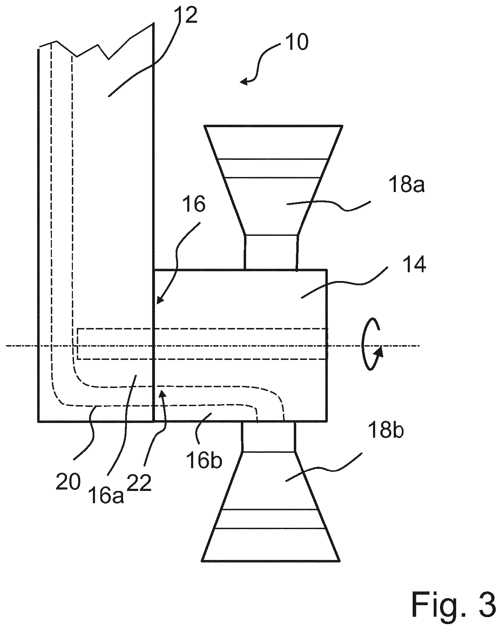

Fig. 2 und 3 zeigen den Endeffektor 10 nach dem ersten Ausführungsbeispiel der Erfindung in einer detaillierteren Darstellung.

Der Endeffektor 10 umfasst eine Schnittstelle 56 zum Anschluss an den Roboterarm, einen Anschluss 58 für die Saugluft oder Druckluft und ein Gehäuse 60 für einen Antriebsmotor.

Wie in Fig. 3 erkennbar umfasst der Endeffektor 10 ferner ein Drehlager 16, über welches der Greiferträger 14 drehbar an einen Endeffektor-Hauptkörper 12 angeschlossen ist. Der Greiferträger 14 umfasst zwei mit Saugluft oder Druckluft betätigbare Sauggreifer 18a, 18b und eine Saug- oder Druckluftleitung 20 zum Bereitstellen der Saugluft für die Sauggreifer 18a, 18b.

Das Drehlager 16 umfasst zwei gegeneinander drehbare Lagerkörper 16a, 16b, die gleichzeitig eine Drehdurchführung für die Saugluft oder Druckluft und einen Ventilmechanismus 22 zum Herstellen und Trennen einer Verbindung zwischen der Saug- oder Druckluftleitung 20 und jeweils einem durch Verändern der Drehlage der Lagerkörper 16a, 16b wählbaren Sauggreifer 18a, 18b bilden.

Die beiden Lagerkörper 16a, 16b bilden die Ventilkörper des Ventilmechanismus 22, der so ausgelegt ist, dass jeder der Sauggreifer 18a, 18b in einem vorgegebenen Winkelintervall von relativen Drehlagen der Lagerkörper 16a, 16b mit der Saug- oder Druckluftleitung 20 verbunden ist.

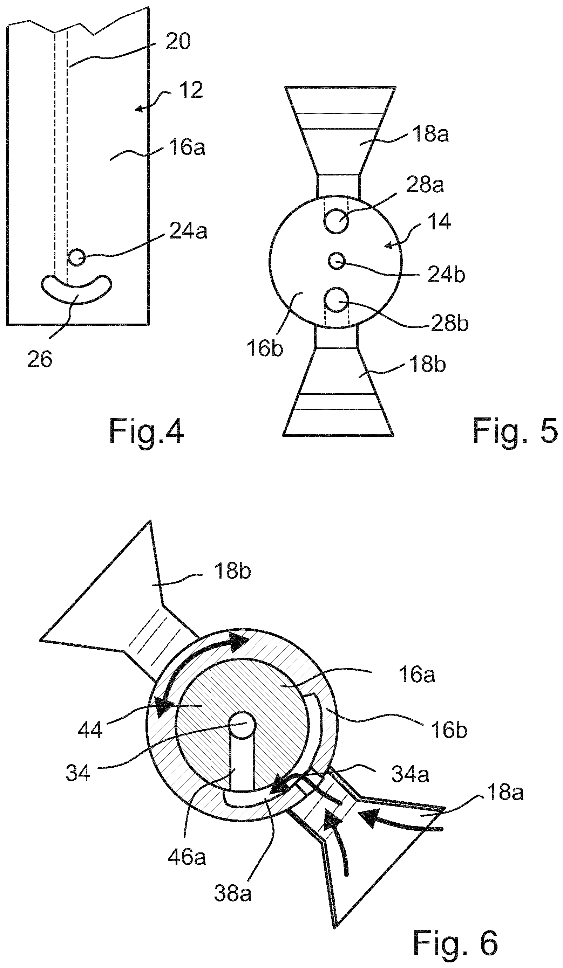

Fig. 4 zeigt den Endeffektor-Hauptkörper 12 eines Endeffektors 10 gemäß Figur 3 ohne den Greiferträger 14. Fig. 5 zeigt eine axiale Lagerfläche des Greiferträgers 14 gemäß Figur 3. In der in Fig. 4 und 5 dargestellten Ausgestaltung der Erfindung ist der Ventilmechanismus 22 ein aus den beiden Lagerkörpern 16a, 16b gebildetes Drehventil mit Drehdurchführung für die Saug- oder Druckluftleitung 20.

Ein erster Lagerkörper 16a ist der Endeffektor-Hauptkörper 12 mit einer Aufnahme 24a für eine Antriebswelle des Greiferträgers 14. Die Antriebswelle ist angetrieben, beispielsweise über einen Kettenantrieb oder einen Stangenantrieb (Fig. 8 und 9) und kann über Kugellager im Endeffektor-Hauptkörper 12 gelagert sein, wobei die Kugellager das von den beiden Lagerkörpern 16a, 16b bzw. deren Kontaktflächen gebildete Axial-Gleitlager ergänzen. Eine im Inneren des Endeffektor-Hauptkörpers 12 verlaufende Saug- oder Druckluftleitung 20 mündet in ein konzentrisch zur Lagerachse kreisbogenförmig gekrümmtes Langloch 26, dessen Erstreckung in Umfangsrichtung den Schwenkbereich bzw. das Winkelintervall definiert, innerhalb dessen ein Bestimmter der beiden Sauggreifer 18a, 18b mit der Saug- oder Druckluftleitung 20 verbunden ist.

Ein zweiter Lagerkörper 16b ist ein Hauptkörper des Greiferträgers 14. Eine im montierten Zustand dem Endeffektor-Hauptkörper 12 zugewandte axiale Stirnseite des zweiten Lagerkörpers 16b liegt im Betrieb dicht gleitend an der mit dem Langloch 26 ausgestatteten Fläche des Endeffektor-Hauptkörpers 12 an. Die beiden aneinander liegenden Flächen können z.B. durch Dichtungen mit Labyrinthdichtungen oder Dichtlippen druckfest gegen den Außenraum abgedichtet sein. In der axialen Stirnseite ist eine Aufnahme 24b für die Antriebswelle ausgebildet oder die Antriebswelle ragt aus der Stirnseite heraus und in einem radialen Abstand von der Drehachse, die dem Abstand des Langlochs 26 von der Drehachse entspricht, sind zwei Ansaugöffnungen 28a, 28b vorgesehen, deren Durchmesser der Breite des Langlochs 26 entspricht und die jeweils mit einem der Sauggreifer 18a, 18b verbunden sind.

Im montierten Zustand der Lagerkörper 16a, 16b überlappt das Langloch 26 dann in unterschiedlichen Winkelbereichen mit jeweils einer der Ansaugöffnungen 28a, 28b, so dass eine Verbindung zwischen der Saug- oder Druckluftleitung 20 und einem der Sauggreifer 18a, 18b hergestellt wird.

Der Endeffektor 10 wird von der Steuerung 52 betrieben, die die Saugkraft der Saugluft oder Druckluft und die Drehlage des Greiferträgers 14 und mithin die Auswahl des aktivierten Greifers 18a, 18b steuern kann. Dazu wird, wie oben bereits beschrieben, durch die Steuerung 52 mit Bildverarbeitung der Typ, eine Lage und Orientierung des zu greifenden Gegenstands erkannt und klassifiziert, davon abhängig ein geeigneter Sauggreifer 18a, 18b gewählt und in eine Drehlage gedreht, in welcher dieser Sauggreifer 18a, 18b aktiv, d.h. mit der Saug- oder Druckluftleitung 20 verbunden ist, und die abhängig von der Orientierung des Gegenstands innerhalb des aktiven Schwenkbereichs bzw. Winkelintervalls festgelegt werden kann und eine geeignete Saugkraft eingestellt.

Fig. 6 zeigt eine alternative Ausgestaltung, die nicht Teil der Erfindung ist. Der als Hülse ausgestalteten Hauptkörper des Greiferträgers 14 ist der zweite Lagerkörper 16b und eine Trägerwelle 44 bildet den ersten Hauptkörper 16a, der fest mit dem Endeffektor-Hauptkörper 12 verbunden ist. Der Hauptkörper des Greiferträgers 14 ist auf die Trägerwelle 44 aufgesteckt. Die Saugluft oder Druckluft wird aus dem aktivierten Sauggreifer 18a durch eine radiale Bohrung 34a im zweiten Lagerkörper 16b in eine sich über einen Teil des Umfangs erstreckende Nut 38a an der radialen Innenfläche des Greiferträgers 14 geführt. Die Innenfläche des Greiferträgers 14 umfasst zwei sowohl in Umfangsrichtung als auch in axialer Richtung gegeneinander versetzte Nuten 38a, 38b, die sich über einen bestimmten Schwenkbereich erstrecken. In den aktiven Winkelintervallen überlappen die Nuten 38a, 38b mit radialen Bohrungen 46a, 46b in der Trägerwelle 44, die wiederum mit einer axialen Bohrung 34 verbunden sind, die als Teil der Saug- oder Druckluftleitung 20 mit einer Saug- oder Druckpumpe (nicht dargestellt) verbunden ist. Durch Drehen des zweiten Lagerkörpers 16b kann auf diese Weise der entsprechende Sauggreifer 18a, 18b mit der Saug- oder Druckluftleitung 20 verbunden werden und so aktiviert werden. Die Nuten 38a, 38b sind gegenüber einander und gegenüber dem Außenraum durch Dichtungen abgedichtet (nicht dargestellt).

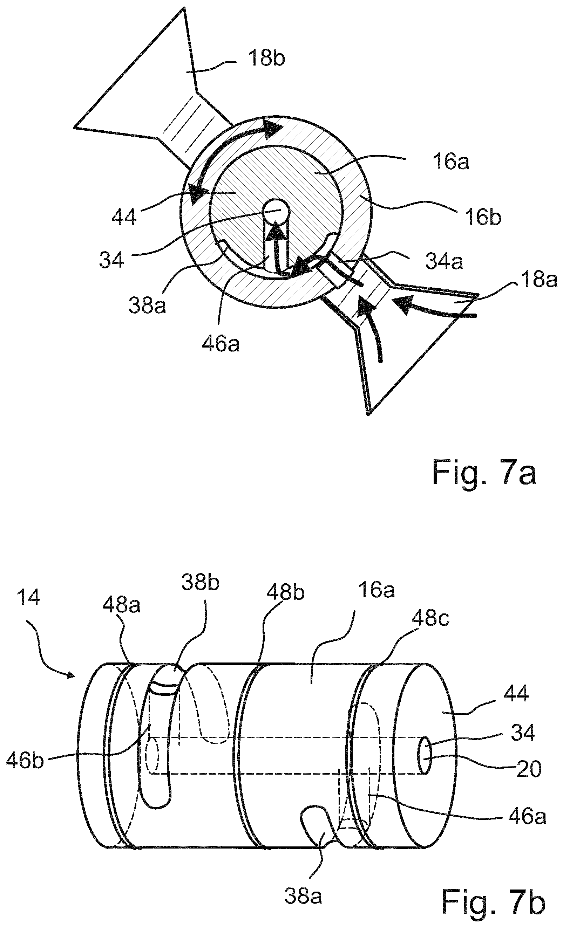

Die Fig. 7a und 7b zeigen eine weitere alternative Ausgestaltung, die nicht Teil der Erfindung ist. Um Wiederholungen zu vermeiden, beschränkt sich die nachfolgende Beschreibung dieser weiteren Ausführungsbeispiele im Wesentlichen auf Unterschiede zur vorigen alternativen Ausgestaltung. Wegen der unveränderten Merkmale wird der Fachmann auf die Beschreibung zur vorigen alternativen Ausgestaltung verwiesen. Für gleich oder ähnlich wirkende Merkmale werden gleiche Bezugszeichen verwendet, um die Ähnlichkeiten zu betonen.

In dem in Fig. 7a und 7b dargestellten Beispiel umfasst das Dreh- und Schwenklager einen drehbaren, als Hülse ausgestalteten Hauptkörper des Greiferträgers 14 als zweiter Lagerkörper 16b und eine Trägerwelle 44 als den ersten Hauptkörper 16a. Der Hauptkörper des Greiferträgers 14 ist auf die Trägerwelle 44 aufgesteckt. Die Saugluft oder Druckluft wird aus dem aktivierten Sauggreifer 18a durch eine radiale Bohrung 34a im zweiten Lagerkörper 16b in eine sich etwa über einen Teil des Umfangs erstrechende Nut 38a an der Außenfläche einer Trägerwelle 44 geführt, die beispielsweise fest mit dem Endeffektor-Hauptkörper 16a verbunden sein kann. Die Trägerwelle 44 umfasst zwei sowohl in Umfangsrichtung als auch in axialer Richtung gegeneinander versetzte Nuten 38a, 38b, die sich über einen bestimmten Schwenkbereich erstrecken und die jeweils über radiale Bohrungen 46a, 46b mit einer axialen Bohrung 34 verbunden sind, die als Teil der Saug- oder Druckluftleitung 20 mit einer Saug- oder Druckpumpe (nicht dargestellt) verbunden ist. Durch Drehen des zweiten Lagerkörpers 16b kann der entsprechende Sauggreifer 18a, 18b mit der Saug- oder Druckluftleitung 20 verbunden werden und so aktiviert werden.

Die Nuten 38a, 38b sind gegenüber einander und gegenüber dem Außenraum durch Dichtungen 48a, 48b, 48c abgedichtet.

Fig. 8 zeigt in erstes Ausführungsbeispiel für einen Drehantrieb des Greiferträgers 14. Der Greiferträger 14(nicht dargestellt) ist mit einem unteren Zahnrad 40a drehfest verbunden, das über ein mit einem Motor 64 verbundenen Zahnrad 40b und einen Antriebsriemen 42 angetrieben wird.

Fig. 9 zeigt in zweites Ausführungsbeispiel für einen Drehantrieb der Welle des Greiferträgers 14. Der Greiferträger 14 (nicht dargestellt) ist mit einem unteren Exzenterrad 40a drehfest verbunden, das über ein mit einem Motor 64 verbundenes Exzenterrad 40b und eine Antriebsstange 42 angetrieben wird.

Fig. 10 zeigt eine schematische Draufsicht eines rechteckigen Ladungsträgers 30 mit einem in den Ladungsträger 30 greifenden Endeffektor 10. Es ist erkennbar, dass das Greifwerkzeug ähnlich wie ein Handgelenk am vorderen Endeffektor-Hauptkörper 12 abgeknickt werden kann, insbesondere um ± 60°, so dass auch Gegenstände 32, die in Ecken des rechteckigen Ladungsträgers 30 liegen, gut gegriffen werden können, auch wenn sie z.B. schräg an Wänden des Ladungsträgers 30 anliegen.

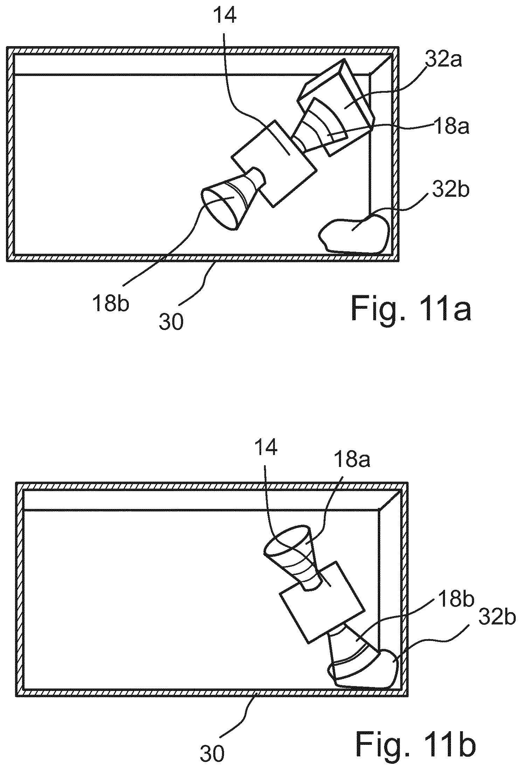

Fig. 11a zeigt eine weitere schematische Draufsicht eines rechteckigen Ladungsträgers mit einem in den Ladungsträger greifenden Endeffektor und zwei zu entnehmenden Artikeln, und zwar einer Tüte 32b und einem Paket 32a. Das Kommissioniersystem erkennt mit Hilfe des Kamerasystems 54 die genaue Position und Orientierung der Artikel 32a, 32b und die Steuerung 52 entscheidet, dass zunächst das Paket 32a entnommen werden soll, und zwar mit dem Sauggreifer 18a. Der Endeffektor 10 wird um die Z-Achse in eine geeignete Richtung gedreht. Durch Rotation des Greiferträgers 14 um die X-Achse wird ein für das Paket 32a geeigneter Sauggreifer 18a aktiviert und innerhalb des diesem Sauggreifer 18a zugeordneten Winkelintervalls zu dem Paket 32a hin ausgerichtet. Das Paket 32a wird dann entnommen, wobei der Sauggreifer 18a beim Hochheben neu orientiert werden kann, um das Ablegen vorzubereiten, z.B. so. dass der Sauggreifer 18a senkrecht nach unten weist.

Fig. 11b zeigt eine weitere schematische Draufsicht des Ladungsträgers aus Fig. 11a mit der Tüte 32b als einem verbleibenden zu entnehmenden Artikel. Der Endeffektor 10 wird um die Z-Achse in eine geeignete Richtung zur Entnahme der Tüte 32b gedreht. Durch Rotation des Greiferträgers 14 um die X-Achse wird ein für die Tüte 32b geeigneter Sauggreifer 18b aktiviert und innerhalb des diesem Sauggreifer 18b zugeordneten Winkelintervalls zu der Tüte 32b hin ausgerichtet. Das Tüte 32b wird dann entnommen, wobei der Sauggreifer 18b beim Hochheben neu orientiert werden kann, um das Ablegen vorzubereiten, z.B. so, dass der Sauggreifer 18b senkrecht nach unten weist.

### Bezugszeichenliste

Endeffektor 10
Endeffektor-Hauptkörper 12
Greiferträger 14
Drehlager 16
Lagerkörper 16a, 16b
Sauggreifer 18a, 18b
Druckluftleitung 20
Ventilmechanismus 22
Aufnahme 24a, 24b (Antriebswelle)
Langloch 26
Ansaugöffnungen 28a, 28b
Ladungsträger 30
Gegenstand (zu entnehmende Artikel in Ladungsträger) 32
radiale Bohrung 34a (Greiferträger)
Nut 38a
Zahnrad 40a, 40b
Antriebsriemen 42
Trägerwelle 44
radiale Bohrungen 46a, 46b (innen)
Dichtungen 48a, 48b, 48c
Kommissionierroboter 50
Steuerung 52
Kamerasystem 54
Schnittstelle 56
Anschluss 58
Gehäuse 60
Schläuche 62
Motor 64

## Patentansprüche

1. Kommissionierroboter mit einem als Knickarm ausgestalteten Roboterarm und einem über eine Schnittstelle am Ende des Roboterarms befestigten Endeffektor (10) mit einem länglichen Endeffektor-Hauptkörper (12) als erstem Lagerkörper (16a) und
einem Greiferträger (14) mit einem Hauptkörper als zweitem Lagerkörper (16b), wobei der Greiferträger (14) über ein Dreh- oder Schwenklager (16) um eine quer zur einer Längsrichtung des Endeffektor-Hauptkörpers (12) verlaufende Dreh- oder Schwenkachse dreh- oder schwenkbar an dem Endeffektor-Hauptkörper (12) angeordnet ist,
wobei
- an dem Greiferträger (14) genau zwei Sauggreifer (18a, 18b) in einander bezogen auf die horizontale Dreh- oder Schwenkachse gegenüber liegenden Positionen angeordnet sind, die durch eine Drehung des Greiferträgers (14) aktivierbar oder deaktivierbar sind, wobei ein jeweils aktivierter Sauggreifer (18a, 18b) über ein freies Ende des Endeffektor-Hauptkörpers (16a) hinaus ragt und innerhalb eines vorgegebenen, dem jeweils aktiven Sauggreifer (18a, 18b) zugeordneten Winkelintervalls schwenkbar ist; und
- eine Saug- oder Druckluftleitung (20) zum Bereitstellen der Saug- oder Druckluft für die Sauggreifer (18a, 18b) durch das Dreh- oder Schwenklager (16) geführt ist wobei bei Drehbewegungen des Greiferträgers (14) innerhalb des vorgegebenen Winkelintervalls von relativen Drehlagen der Lagerkörper (16a, 16b) eine Verbindung zwischen dem jeweils aktiven Sauggreifer (18a, 18b) und der Saug- oder Druckluftleitung (20) bestehen bleibt, wobei
- die unterschiedlichen Sauggreifern (18a, 18b) zugeordneten vorgegebenen Winkelintervalle von relativen Drehlagen der Lagerkörper (16a, 16b) nicht überlappen und sich über Schwenkwinkel von wenigstens 60°, vorzugsweise wenigstens 90°, weiter bevorzugt wenigstens 120 erstrecken.

2. Kommissionierroboter nach Anspruch 1,
**dadurch gekennzeichnet, dass** ein Drehantrieb zum Drehen des Greiferträgers (14) in oder an dem Endeffektor-Hauptkörper (12) angeordnet ist;

3. Kommissionierroboter nach einem der vorhergehenden Ansprüche,
**dadurch gekennzeichnet, dass** der Endeffektor-Hauptkörper (12) zur Befestigung an einem Roboterarm ausgelegt ist, dessen Endglied um eine Längsachse des Endeffektor-Hauptkörpers (12) drehbar ist.

4. Kommissionierroboter nach einem der vorhergehenden Ansprüche,
**gekennzeichnet durch**
einen passiven Ventilmechanismus (22) zum Herstellen und Trennen einer Verbindung zwischen der Saug- oder Druckluftleitung (20) und einem der Sauggreifer (18a, 18b), wobei der passive Ventilmechanismus so gestaltet ist, dass beim Aktivieren eines Sauggreifers (18a, 18b) durch Drehen in das diesem Sauggreifer zugeordnete Winkelintervall die Verbindung zwischen der Saug- oder Druckluftleitung (20) und dem aktivierten Sauggreifer (18a, 18b) automatisch hergestellt wird.

5. Kommissionierroboter nach Anspruch 4,
**dadurch gekennzeichnet, dass** das Dreh- oder Schwenklager zwei Lagerkörper (16a, 16b) umfasst, wobei einer der Lagerkörper (16a, 16b) einen Ventilkörper des Ventilmechanismus (22) bildet oder mit einem Ventilkörper des Ventilmechanismus (22) derart mechanisch verbunden ist, so dass jeweils einer der Sauggreifer (18a, 18b) in dem ihm zugeordneten Winkelintervall von Drehlagen der Lagerkörper (16a, 16b) mit der Saug- oder Druckluftleitung (20) verbunden ist.

6. Kommissionierroboter nach Anspruch 5,
**dadurch gekennzeichnet, dass**
der Ventilmechanismus (22) ein aus den beiden Lagerkörpern (16a, 16b) gebildetes Drehventil mit Drehdurchführung für die Saug- oder Druckluftleitung (20) bildet.

7. Kommissionierroboter nach Anspruch 5 oder 6,
**dadurch gekennzeichnet, dass**
die beiden Lagerkörper (16a, 16b) gleitend aneinander anliegende Lagerflächen mit Durchtrittsöffnungen umfassen, die in den vorgegebenen Winkelintervallen miteinander überlappen und so die Verbindung zwischen jeweils einem der Sauggreifer (18a, 18b) und der Saug- oder Druckluftleitung (20) herstellen.

8. Kommissionierroboter nach Anspruch 7,
**dadurch gekennzeichnet, dass**
die gleitend aneinander anliegenden Lagerflächen axiale Lagerflächen sind und eine der Durchtrittsöffnungen ein kreisbogenförmiges Langloch (26) ist, welches sich über das Winkelintervall erstreckt.

9. Kommissionierroboter nach einem der vorhergehenden Ansprüche,
**dadurch gekennzeichnet, dass** die genau zwei Sauggreifer (18a, 18b) zwei Sauggreifer mit unterschiedlichen Charakteristika umfassen.

10. Kommissionierroboter nach einem der vorhergehenden Ansprüche,
**gekennzeichnet durch**
einen an dem Greiferträger (14) angeordneten Magnetgreifer.

11. Kommissioniersystem mit einem Kommissionierroboter (50) nach einem der Ansprüche 1 - 10, einer Bildverarbeitungsvorrichtung zum Erfassen einer Lage und Position eines zu greifenden Artikels (32a, 32b) in einem Ladungsträger und einer Steuerung (52) zum Steuern des Endeffektors (10), wobei die Steuerung (52) dazu ausgelegt ist, einen Drehwinkel des Endeffektor-Hauptkörpers (12) und des Greiferträgers (14) abhängig von der erfassten Position und Lage des Artikels (32a, 32b) und von Behälterwänden des Ladungsträgers (30) einzustellen.

12. Kommissioniersystem nach Anspruch 11, **dadurch gekennzeichnet, dass** die Bildverarbeitungsvorrichtung dazu ausgelegt ist, einen Artikeltyp des Artikels zu erfassen und die Steuerung (52) dazu ausgelegt ist, abhängig von dem erfassten Artikeltyp einen für den Artikeltyp geeigneten Sauggreifer (18a, 18b) auszuwählen und in eine aktive Position zu drehen.

13. Kommissioniersystem nach Anspruch 11 oder 12,
**dadurch gekennzeichnet, dass** die Steuerung (52) dazu ausgelegt ist, für die Einstellung der Drehwinkel des Endeffektor-Hauptkörpers und des Greiferträgers und/oder für die Auswahl des geeigneten Sauggeifers (18a, 18b) neben den erfassten Daten der Bildverarbeitungsvorrichtung auch Artikelstammdaten eines erkannten Artikels zu nutzen.

## Claims

1. A commissioning robot with a robot arm designed as a hinged arm and an end effector (10) attached via an interface at the end of the robot arm, with an elongated end effector main body (12) as a first bearing body (16a) and a gripper carrier (14) with a main body as a second bearing body (16b), wherein the gripper carrier (14) is rotatably or pivotably arranged on the end effector main body (12) via a rotary or pivot bearing (16) around a rotary or pivot axis that runs transversely to a longitudinal direction of the end effector main body (12), wherein
- exactly two suction grippers (18a, 18b) are arranged on the gripper carrier (14) in positions opposite to each other relative to the horizontal rotary or pivot axis, which can be activated or deactivated by a rotation of the gripper carrier (14), wherein a respectively activated suction gripper (18a, 18b) extends beyond a free end of the end effector main body (16a) and is pivotable within a predetermined angular interval assigned to the respectively active suction gripper (18a, 18b); and
- a suction or compressed air line (20) for providing the suction or compressed air for the suction grippers (18a, 18b) is guided through the rotary or pivot bearing (16), wherein during rotational movements of the gripper carrier (14) within the predetermined angular interval of relative rotational positions of the bearing bodies (16a, 16b), a connection between the respectively active suction gripper (18a, 18b) and the suction or compressed air line (20) remains established,
- wherein the predetermined angular intervals of relative rotational positions of the bearing bodies (16a, 16b) assigned to the different suction grippers (18a, 18b) do not overlap and extend over pivot angles of at least 60°, preferably at least 90°, more preferably at least 120°.

2. A commissioning robot according to claim 1, **characterized in that** a rotary drive for rotating the gripper carrier (14) is arranged in or on the end effector main body (12).

3. A commissioning robot according to one of the preceding claims, **characterized in that** the end effector main body (12) is designed for attachment to a robot arm whose end element is rotatable around a longitudinal axis of the end effector main body (12).

4. A commissioning robot according to one of the preceding claims, **characterized by** a passive valve mechanism (22) for establishing and disconnecting a connection between the suction or compressed air line (20) and one of the suction grippers (18a, 18b), wherein the passive valve mechanism is designed in such a way that when a suction gripper (18a, 18b) is activated by rotating into the angular interval assigned to this suction gripper, the connection between the suction or compressed air line (20) and the activated suction gripper (18a, 18b) is automatically established.

5. A commissioning robot according to claim 4, **characterized in that** the rotary or pivot bearing comprises two bearing bodies (16a, 16b), wherein one of the bearing bodies (16a, 16b) forms a valve body of the valve mechanism (22) or is mechanically connected to a valve body of the valve mechanism (22) in such a way that each of the suction grippers (18a, 18b) is connected to the suction or compressed air line (20) in the angular interval assigned to it from rotational positions of the bearing bodies (16a, 16b).

6. A commissioning robot according to claim 5, **characterized in that** the valve mechanism (22) forms a rotary valve with rotary feed-through for the suction or compressed air line(20) formed from the two bearing bodies (16a, 16b).

7. A commissioning robot according to claim 5 or 6, **characterized in that** the two bearing bodies (16a, 16b) comprise bearing surfaces that are slidingly adjacent to each other with passage openings, which overlap with each other in the predetermined angular intervals and thus establish the connection between each of the suction grippers (18a, 18b) and the suction or compressed air line (20).

8. A commissioning robot according to claim 7, **characterized in that** the slidingly adjacent bearing surfaces are axial bearing surfaces and one of the passage openings is a circular arc-shaped elongated hole (26), which extends over the angular interval.

9. A commissioning robot according to one of the preceding claims, **characterized in that** the exactly two suction grippers (18a, 18b) comprise two suction grippers with different characteristics.

10. A commissioning robot according to one of the preceding claims, **characterized by** a magnetic gripper arranged on the gripper carrier (14).

11. A commissioning system with a commissioning robot (50) according to one of the claims 1 - 10, an image processing device for detecting a position and orientation of an article (32a, 32b) to be gripped in a load carrier and a control unit (52) for controlling the end effector (10), wherein the control unit (52) is designed to set a rotation angle of the end effector main body (12) and of the gripper carrier (14) depending on the detected position and orientation of the article (32a, 32b) and on container walls of the load carrier (30).

12. A commissioning system according to claim 11, **characterized in that** the image processing device is designed to detect an article type of the article and the control unit (52) is designed to select a suction gripper (18a, 18b) suitable for the article type depending on the detected article type and to rotate it into an active position.

13. A commissioning system according to claim 11 or 12, **characterized in that** the control unit (52) is designed to use article master data of a recognized article in addition to the detected data of the image processing device for setting the rotation angles of the end effector main body and the gripper carrier and/or for selecting the suitable suction gripper (18a, 18b).

## Revendications

1. Robot de préparation de commandes avec un bras robotisé conçu comme un bras articulé et un effecteur terminal (10) fixé via une interface à l'extrémité du bras robotisé, avec un corps principal d'effecteur terminal allongé (12) comme premier corps de palier (16a) et un support de préhenseur (14) avec un corps principal comme second corps de palier (16b), dans lequel le support de préhenseur (14) est disposé de manière rotative ou pivotante sur le corps principal d'effecteur terminal (12) via un palier rotatif ou pivotant (16) autour d'un axe de rotation ou de pivotement qui s'étend transversalement à une direction longitudinale du corps principal d'effecteur terminal (12), dans lequel
- exactement deux préhenseurs à ventouse (18a, 18b) sont disposés sur le support de préhenseur (14) dans des positions opposées l'une à l'autre par rapport à l'axe de rotation ou de pivotement horizontal, qui peuvent être activés ou désactivés par une rotation du support de préhenseur (14), dans lequel un préhenseur à ventouse(18a, 18b) respectivement activé s'étend au-delà d'une extrémité libre du corps principal d'effecteur terminal (16a) et est pivotable dans un intervalle angulaire prédéterminé attribué au préhenseur à ventouse (18a, 18b)respectivement actif;
- et une conduite d'air d'aspiration ou d'air comprimé (20) pour fournir l'air d'aspiration ou l'air comprimé pour les préhenseurs à ventouse (18a, 18b) est guidée à travers le palier rotatif ou pivotant (16), dans lequel pendant les mouvements de rotation du support de préhenseur (14) dans l'intervalle angulaire prédéterminé des positions de rotation relatives des corps de palier (16a, 16b), une connexion entre le préhenseur à ventouse(18a, 18b) respectivement actif et la conduite d'air d'aspiration ou d'air comprimé (20) reste établie,
- dans lequel les intervalles angulaires prédéterminés des positions de rotation relatives des corps de palier (16a, 16b) attribués aux différents préhenseurs à ventouse (18a, 18b) ne se chevauchent pas et s'étendent sur des angles de pivotement d'au moins 60°, de préférence au moins 90°, plus préférablement au moins 120°.

2. Robot de préparation de commandes selon la revendication 1, **caractérisé en ce que** un entraînement rotatif pour faire tourner le support de préhenseur (14) est disposé dans ou sur le corps principal d'effecteur terminal (12).

3. Robot de préparation de commandes selon l'une des revendications précédentes, **caractérisé en ce que** le corps principal d'effecteur terminal (12) est conçu pour être fixé à un bras robotisé dont l'élément d'extrémité est rotatif autour d'un axe longitudinal du corps principal d'effecteur terminal (12).

4. Robot de préparation de commandes selon l'une des revendications précédentes, **caractérisé par** un mécanisme de valve passif (22) pour établir et déconnecter une connexion entre la conduite d'air d'aspiration ou d'air comprimé (20) et l'un des préhenseurs à ventouse (18a, 18b), dans lequel le mécanisme de valve passif est conçu de telle manière que lorsqu'un préhenseur à ventouse (18a, 18b) est activé par rotation dans l'intervalle angulaire attribué à ce préhenseur à ventouse, la connexion entre la conduite d'air d'aspiration ou d'air comprimé (20) et le préhenseur à ventouse activé (18a, 18b) est automatiquement établie

5. Robot de préparation de commandes selon la revendication 4, **caractérisé en ce que** le palier rotatif ou pivotant comprend deux corps de palier (16a, 16b), dans lequel l'un des corps de palier (16a, 16b) forme un corps de valve du mécanisme de valve (22) ou est mécaniquement connecté à un corps de valve du mécanisme de valve (22) de telle manière que chacun des préhenseurs à ventouse (18a, 18b) est connecté à la conduite d'air d'aspiration ou d'air comprimé (20) dans l'intervalle angulaire qui lui est attribué à partir des positions de rotation des corps de palier (16a, 16b).

6. Robot de préparation de commandes selon la revendication 5, **caractérisé en ce que** le mécanisme de valve (22) forme une valve rotative avec passage rotatif pour la conduite d'air d'aspiration ou d'air comprimé (20) formée à partir des deux corps de palier (16a, 16b).

7. Robot de préparation de commandes selon la revendication 5 ou 6, **caractérisé en ce que** les deux corps de palier (16a, 16b) comprennent des surfaces de palier qui sont adjacentes de manière glissante l'une à l'autre avec des ouvertures de passage, qui se chevauchent dans les intervalles angulaires prédéterminés et établissent ainsi la connexion entre chacun des préhenseurs à ventouse (18a, 18b) et la conduite d'air d'aspiration ou d'air comprimé (20).

8. Robot de préparation de commandes selon la revendication 7, **caractérisé en ce que** les surfaces de palier adjacentes de manière glissante sont des surfaces de palier axiales et l'une des ouvertures de passage est un trou oblong en forme d'arc de cercle (26), qui s'étend sur l'intervalle angulaire.

9. Robot de préparation de commandes selon l'une des revendications précédentes, **caractérisé en ce que** les exactement deux préhenseurs à ventouse (18a, 18b) comprennent deux préhenseurs à ventouse avec des caractéristiques différentes.

10. Robot de préparation de commandes selon l'une des revendications précédentes, **caractérisé par** un préhenseur magnétique disposé sur le support de préhenseur (14).

11. Système de préparation de commandes avec un robot de préparation de commandes (50) selon l'une des revendications 1 à 10, un dispositif de traitement d'image pour détecter une position et une orientation d'un article (32a, 32b) à saisir dans un support de charge et une unité de commande (52) pour commander l'effecteur terminal (10), dans lequel l'unité de commande (52) est conçue pour régler un angle de rotation du corps principal d'effecteur terminal (12) et du support de préhenseur (14) en fonction de la position et de l'orientation détectées de l'article (32a, 32b) et des parois du conteneur du support de charge (30).

12. Système de préparation de commandes selon la revendication 11, **caractérisé en ce que** le dispositif de traitement d'image est conçu pour détecter un type d'article de l'article et l'unité de commande (52) est conçue pour sélectionner un préhenseur à ventouse (18a, 18b) adapté au type d'article en fonction du type d'article détecté et pour le faire pivoter dans une position active.

13. Système de préparation de commandes selon la revendication 11 ou 12, **caractérisé en ce que** l'unité de commande (52) est conçue pour utiliser les données de base d'article d'un article reconnu en plus des données détectées du dispositif de traitement d'image pour régler les angles de rotation du corps principal d'effecteur terminal et du support de préhenseur et/ou pour sélectionner le préhenseur à ventouse approprié (18a, 18b)
